# EUROPEAN PATENT SPECIFICATION

(11) **EP 3 703 080 B1**
(45) Date of publication and mention of the grant of the patent: **17.01.2024**
(21) Application number: 18869517.5
(22) Date of filing: 26.10.2018
(51) Int. Cl.: H01B 1/04, H01B 5/08, C01B 32/168, H01B 7/00

(54) **CARBON NANOTUBE-COATED ELECTRIC WIRE**
MIT KOHLENSTOFFNANORÖHRCHEN BESCHICHTETER ELEKTRISCHER DRAHT
FIL ÉLECTRIQUE REVÊTU DE NANOTUBES DE CARBONE

(30) Priority: 26.10.2017 JP 2017207674
(43) Date of publication of application: 02.09.2020
(73) Proprietor: Furukawa Electric Co., Ltd., Chiyoda-ku Tokyo 100-8322 (JP)
(72) Inventor: YAMASHITA, Satoshi, Tokyo 100-8322 (JP); AIZAWA, Hideki, Tokyo 100-8322 (JP); YAMAZAKI, Satoshi, Tokyo 100-8322 (JP)
(74) Representative: Gunzelmann, Rainer
(86) International application number: PCT/JP2018/039967
(87) International publication number: WO 2019/083025

(56) References cited:
- EP-A1- 3 703 078
- WO-A1-2014/112405
- WO-A1-2016/186263
- WO-A1-2017/033482
- JP-A- 2015 079 671
- JP-A- 2017 106 129
- JP-A- 2017 171 545
- US-A1- 2012 004 702
- US-A1- 2014 231 118
- LUKASZ KURZEPA ET AL: "Replacing Copper Wires with Carbon Nanotube Wires in Electrical Transformers", ADVANCED FUNCTIONAL MATERIALS, WILEY - V C H VERLAG GMBH & CO. KGAA, DE, vol. 24, no. 5, 5 February 2014 (2014-02-05), pages 619-624, XP001588511, ISSN: 1616-301X, DOI: 10.1002/ADFM.201302497 [retrieved on 2013-09-17]
- LEKAWA-RAUS AGNIESZKA ET AL: "Towards the development of carbon nanotube based wires", CARBON, vol. 68, 1 March 2014 (2014-03-01), pages 597-609, XP055814489, GB ISSN: 0008-6223, DOI: 10.1016/j.carbon.2013.11.039

## Description

### Technical Field

The present disclosure relates to a coated carbon nanotube electric wire in which a carbon nanotube wire configured of a plurality of carbon nanotubes is coated with an insulating material.

### Background Art

A carbon nanotube (hereinafter, also referred to as a "CNT") is a material that has various characteristics and is expected to be applied to many fields.

For example, the CNT is a three-dimensional mesh structure configured of a single layer of a tubular element that has a hexagonal lattice mesh structure or multiple layers that are substantially coaxially disposed, has a light weight, and has various excellent characteristics such as electroconductivity, heat conductivity, and mechanical strength. However, it is not easy to form CNTs as wires, and technologies using CNTs that have long lengths in units of meters or longer, in particular, as wires have not been proposed.

On the other hand, utilization of a CNT has been considered as an alternative of metal, which is an implant material for a via hole formed in a multilayer wiring structure. Specifically, a wiring structure using, as an interlayer wiring of two or more conductive layers, multiple CNT layers adapted such that a plurality of cut surfaces of the multiple CNT layers extending coaxially from a growth base point toward an end on a further side of the multiple CNT layers are brought into contact with the respective conductive layers has been proposed for the purpose of reducing a resistance of the multilayer wiring structure (Patent Literature 1).

As another example, a carbon nanotube material in which an electroconductivity deposit made of metal or the like is formed at an electrical junction point of adjacent CNT wires has been proposed for the purpose of further improving electroconductivity of the CNT material, and there is a disclosure that such a carbon nanotube material can be applied to a wide range of applications (Patent Literature 2). Also, a heater that has a heat conductive member produced from a carbon nanotube matrix based on excellent heat conductivity of the CNT wire has been proposed (Patent Literature 3).

Incidentally, electrical wires, each of which includes a core wire made of one or a plurality of wires and an insulating coating with which the core wire is coated, have been used as power lines or signal lines in various fields of automobiles, industrial devices, and the like. Although copper or copper alloys are typically used as materials of wires that configure the core wires in terms of electric characteristics, aluminum or aluminum alloys have been proposed in recent years in terms of weight reduction. For example, a specific weight of aluminum is about 1/3 of a specific weight of copper, and electric conductivity of aluminum is about 2/3 of electric conductivity of copper (in a case in which the electric conductivity of pure copper is defined as a reference of 100%IACS, the electric conductivity of pure aluminum is about 66%IACS). In order to cause the same amount of current as that flowing through a copper wire to flow through an aluminum wire, it is necessary to increase the sectional area of the aluminum wire to about 1.5 times the sectional area of the copper wire. However, even if such an aluminum wire with an increased sectional area is used, the mass of the aluminum wire is about a half of the mass of the pure copper wire. Therefore, it is advantageous to use the aluminum wire in terms of weight reduction.

Also, improvements in performance and functions of automobiles, industrial devices, and the like have advanced, the number of disposed various electric devices, control devices, and the like increases with the improvements, and the number of wirings of electric wiring elements used in these devices and heat generated from core wires tend to increase. Thus, there is a requirement for improving heat dissipation characteristics of electric wires without degrading insulation properties of insulating coating. On the other hand, there is also a requirement for weight reduction of wires in order to improve fuel consumption of mobile bodies such as automobiles for environmental compatibility.

### Document List

### Patent Literatures

Patent Literature 1: Japanese Patent Application Publication No. 2006-120730
Patent Literature 2: Japanese Translation of PCT International Application Publication No. 2015-523944
Patent Literature 3: Japanese Patent Application Publication No. 2015-181102

EP 3 703 078 A1 constitutes a prior art document under Art. 54(3) EPC and describes a coated carbon nanotube electric wire formed by coating a carbon nanotube wire formed by a plurality of carbon nanotubes with an insulating material. The carbon nanotube wires may be twisted together into a twisted wire and the possibility of adjusting the equivalent circle diameter and the sectional area of the carbon nanotube wire.

US 2014/231118 A1 describes a method of insulating electrically conducting fibers comprising carbon nanotubes to prevent infiltration of the insulating material into the voids surrounding the carbon nanotubes, which disrupts the electrical properties of the fibers.

US 2012/004702 A1 describes a pacemaker lead including a plurality of bodies covered by an insulation layer. The body includes at least one carbon nanotube yarn. Each of the carbon nanotube yarns includes a plurality of carbon nanotubes. The carbon nanotube yarns may be spirally wound around the axis of the body at zero pitch.

A conventional method of replacing copper wires with carbon nanotube wires in electrical transformers is disclosed by LUKASZ KURZEPA ET AL: "Replacing Copper Wires with Carbon Nanotube Wires in Electrical Transformers", ADVANCED FUNCTIONAL MATERIALS, WILEY - V C H VERLAG GMBH & CO. KGAA, DE, vol. 24, no. 5, 5 February 2014 (2014-02-05), pages 619-624. Therein, the individual CNT fibers are bundled to form a CNT cord which is later insulated with a non-conductive polymeric compound.

A conventional method of forming an insulating layer on the surface of CNT fibers is disclosed by LEKAWA-RAUS AGNIESZKA ET AL: "Towards the development of carbon nanotube based wires", CARBON, vol. 68, 1 March 2014 (2014-03-01), pages 597-609. More than two CNT fibers may be bundled to form CNT cords. To avoid compromising either the electrical or the mechanical performance of the CNT conductors, a polymer which has very high wetting angle on given assembly or very high viscosity is used.

JP 2015 079671 A describes a conductive wire comprising an insulator and a carbon nanotube introduced into a hollow part of the insulator. The carbon nanotubes are mixed in a solvent and injected, in the form of ink, into a metal tube within the insulator.

### Summary of Invention

### Technical Problem

The present disclosure is related to providing a coated carbon nanotube electric wire that has excellent electroconductivity comparable to a wire made of copper, aluminum, or the like and that exhibits excellent weight reduction and heat dissipation characteristics.

### Solution to Problem

A coated carbon nanotube electric wire according to the present invention is set forth in claim 1. The coated carbon nanotube electric wire includes: a carbon nanotube wire including one or more carbon nanotube aggregates configured of a plurality of carbon nanotubes, and an insulating coating layer coating the carbon nanotube wire, in which a proportion of a sectional area of the insulating coating layer in a radial direction with respect to a sectional area of the carbon nanotube wire in the radial direction is equal to or greater than 0.001 and equal to or less than 1.5.

According to the aspect of the present disclosure, the sectional area of the carbon nanotube wire in the radial direction is equal to or greater than 0.03 mm² and equal to or less than 80 mm² in the coated carbon nanotube electric wire.

In the aspect of the present disclosure, the proportion of the Young's modulus of the material configuring the insulating coating layer with respect to the Young's modulus of the carbon nanotube wire is equal to or greater than 0.00001 and equal to or less than 0.5, in the coated carbon nanotube electric wire.

In the aspect of the present disclosure, the proportion of the Young's modulus of the material configuring the insulating coating layer with respect to the Young's modulus of the carbon nanotube wire is equal to or greater than 0.0005 and equal to or less than 0.1, in the coated carbon nanotube electric wire.

In the aspect of the present disclosure, the carbon nanotube wire includes a plurality of the carbon nanotube aggregates, and a full-width at half maximum Δθ in azimuth angle in azimuth plot based on small-angle X-ray scattering indicating an orientation of the plurality of carbon nanotube aggregates is equal to or less than 60°, in the coated carbon nanotube electric wire.

In the aspect of the present disclosure, a q value of a peak top at a (10) peak of scattering intensity based on X-ray scattering indicating density of the plurality of carbon nanotubes is equal to or greater than 2.0 nm⁻¹ and equal to or less than 5.0 nm⁻¹, and a full-width at half maximum Δq is equal to or greater than 0.1 nm⁻¹ and equal to or less than 2.0 nm⁻¹, in the coated carbon nanotube electric wire.

In the aspect of the present disclosure, a thickness deviation rate of the insulating coating layer is equal to or greater than 50%, in the coated carbon nanotube electric wire.

According to the aspect of the present disclosure, the thickness deviation rate of the insulating coating layer is equal to or greater than 80% in the coated carbon nanotube electric wire.

### Effects of Invention

The carbon nanotube wire using the carbon nanotube as a core wire has anisotropic heat conduction unlike the core wire made of metal, and heat is delivered with higher priority in a longitudinal direction than in a radial direction. In other words, since the carbon nanotube wire has anisotropic heat dissipation characteristics, the carbon nanotube wire has more excellent heat dissipation characteristics as compared with the core wire made of metal. Therefore, it is necessary to design the insulating coating layer with which the core wire using the carbon nanotube is coated differently from design of the insulating coating layer of the core wire made of metal. However, according to the aspect of the present disclosure, since the proportion of the sectional area of the insulating coating layer in the radial direction with respect to the sectional area of the carbon nanotube wire in the radial direction is equal to or greater than 0.001 and equal to or less than 1.5, it is possible to obtain excellent heat dissipation characteristics and further to achieve weight reduction regardless of the insulating coating layer being formed.

According to the aspect of the present disclosure, since the proportion of the Young's modulus of the material configuring the insulating coating layer with respect to the Young's modulus of the carbon nanotube wire is equal to or greater than 0.00001 and equal to or less than 0.5, it is possible to reliably prevent the insulating coating layer from peeling off from the carbon nanotube wire and prevent cracking from occurring in the insulating coating layer even if the coated carbon nanotube electric wire is repeatedly bent.

According to the aspect of the present disclosure, since the full-width at half maximum Δθ in azimuth angle in azimuth plot based on small-angle X-ray scattering of the carbon nanotube aggregates in the carbon nanotube wire is equal to or less than 60°, the carbon nanotubes and the carbon nanotube aggregates are highly oriented in the carbon nanotube wire, and heat dissipation characteristics of the carbon nanotube wire is thus further improved.

According to the aspect of the present disclosure, since the q value of the peak top at the (10) peak of the scattering intensity based on X-ray scattering of the oriented carbon nanotubes is equal to or greater than 2.0 nm⁻¹ and equal to or less than 5.0 nm⁻¹, and the full-width at half maximum Δq is equal to or greater than 0.1 nm⁻¹ and equal to or less than 2.0 nm⁻¹, the carbon nanotubes can be present at a high density, and heat dissipation characteristics of the carbon nanotube wire is thus further improved.

According to the aspect of the present disclosure, since the thickness deviation rate of the insulating coating layer is equal to or greater than 50%, the thickness of the insulating coating layer is uniformized, and mechanical strength such as abrasion resistance and bendability of the coated carbon nanotube electric wire is further improved.

### Brief Description of the Drawings

[FIG. 1] An explanatory diagram of a coated carbon nanotube electric wire according to an embodiment of the present disclosure.
[FIG. 2] An explanatory diagram of a carbon nanotube wire used in the coated carbon nanotube electric wire according to the embodiment of the present disclosure.
[FIG. 3] FIG. 3A is a diagram illustrating an example of a two-dimensional scattering image of scattering vectors q of a plurality of carbon nanotube aggregates obtained by SAXS, and FIG. 3B is a graph illustrating an example of azimuth angle-scattering intensity of an arbitrary scattering vector q using a position of a transmitted X ray as an origin in a two-dimensional scattering image.
[FIG. 4] A graph illustrating a relationship of a q value-intensity obtained by WAXS of a plurality of carbon nanotubes that configure the carbon nanotube aggregates.

### Description of Embodiments

Hereinafter, a coated carbon nanotube electric wire according to an embodiment of the present disclosure will be described with reference to drawings.

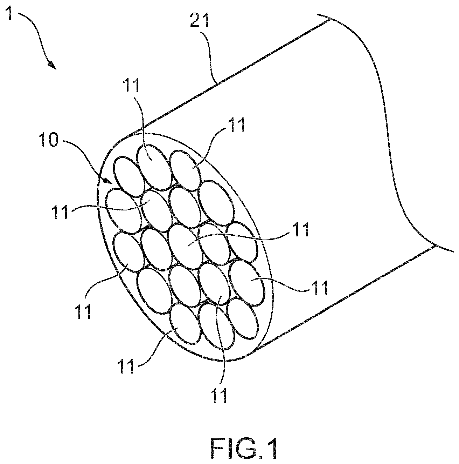

As illustrated in FIG. 1, a coated carbon nanotube electric wire according to the embodiment of the present disclosure (hereinafter, also referred to as a "coated CNT electric wire") 1 has a configuration in which a peripheral surface of a carbon nanotube wire (hereinafter, also referred to as a "CNT wire") 10 is coated with an insulating coating layer 21. In other words, the CNT wire 10 is coated with the insulating coating layer 21 along the longitudinal direction. In the coated CNT electric wire 1, the entire peripheral surface of the CNT wire 10 is coated with the insulating coating layer 21. Also, the coated CNT electric wire 1 is adapted such that the insulating coating layer 21 is in direct contact with the peripheral surface of the CNT wire 10. Although the CNT wire 10 is illustrated as a single wire (single-strand wire) including one CNT wire 10 in FIG. 1, the CNT wire 10 may be in a stranded wire state in which a plurality of CNT wires 10 are twisted together. It is possible to appropriately adjust an equivalent circle diameter and a sectional area of the CNT wire 10 by employing the CNT wire 10 in the form of a stranded wire.

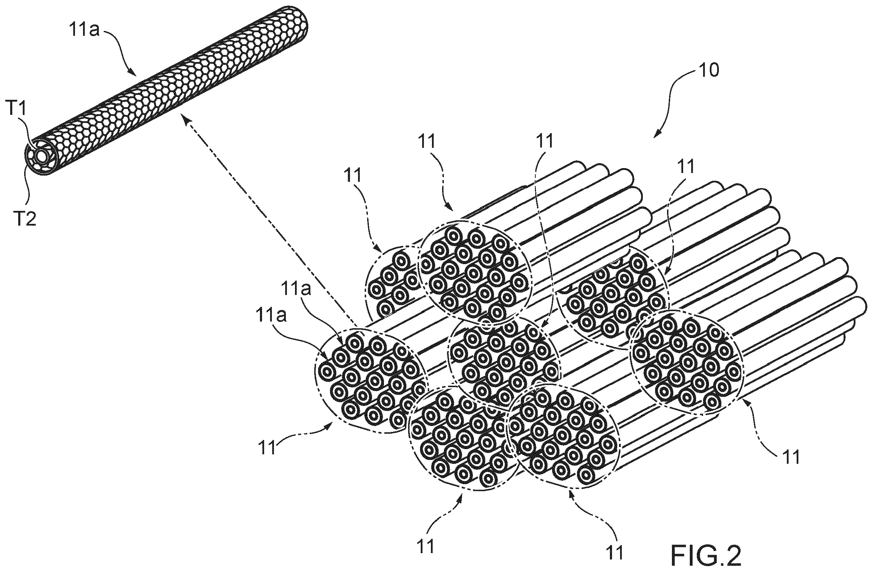

As illustrated in FIG. 2, the CNT wire 10 is formed by bundling one or more carbon nanotube aggregates configured of a plurality of CNTs 11a, 11a, ... with layer structures of one or more layers (hereinafter, also referred to as "CNT aggregates"). Here, the CNT wire means a CNT wire in which the proportion of the CNT is equal to or greater than 90% by mass. Note that plating and dopant are excluded from calculation of the CNT proportion in the CNT wire. In FIG. 2, the CNT wire 10 has a configuration in which a plurality of CNT aggregates 11 are bundled. The longitudinal direction of the CNT aggregates 11 forms the longitudinal direction of the CNT wire 10. Therefore, the CNT aggregates 11 has a linear shape. The plurality of CNT aggregates 11, 11, ... in the CNT wire 10 are disposed such that long-axis directions thereof are substantially aligned. Thus, the plurality of CNT aggregates 11, 11, ... in the CNT wire 10 are oriented. Although the equivalent circle diameter of the CNT wire 10 that is a single wire is not particularly limited, the equivalent circle diameter is, for example, equal to or greater than 0.01 mm and equal to or less than 4.0 mm. Also, although the equivalent circle diameter of the CNT wire 10 that is a stranded wire is not particularly limited, the equivalent circle diameter is, for example, equal to or greater than 0.1 mm and equal to or less than 15 mm.

The CNT aggregates 11 are a bundle of CNTs 11a with layer structures of one or more layers. The longitudinal direction of the CNTs 11a forms the longitudinal direction of the CNT aggregates 11. The plurality of CNTs 11a, 11a, ... in the CNT aggregates 11 are disposed such that long-axis directions thereof are substantially aligned. Therefore, the plurality of CNTs 11a, 11a, ... in the CNT aggregates 11 are oriented. The equivalent circle diameter of the CNT aggregates 11 is equal to or greater than 20 nm and equal to or less than 1000 nm, for example, and is more typically equal to or greater than 20 nm and equal to or less than 80 nm. The width dimension of the outermost layer of the CNTs 11a is, for example, equal to or greater than 1.0 nm and equal to or less than 5.0 nm.

The CNTs 11a configuring the CNT aggregates 11 have tubular elements with single-layer structure or a multiple-layer structure, which are called single-walled nanotubes (SWNT) and multi-walled nanotubes (MWNT), respectively. Although FIG. 2 illustrates only the CNTs 11a with a two-layer structure for convenience, the CNT aggregates 11 may also include CNTs with a layer structure of three or more layers or CNTs with a single layer structure and may be formed of the CNTs with the layer structure of three or more layers or the CNTs with the single-layer structure.

The CNTs 11a with a two-layer structure have three-dimensional mesh structure in which two tubular elements T1 and T2 with hexagonal lattice mesh structures are substantially coaxially disposed and are called double-walled nanotubes (DWNT). Each hexagonal lattice as a constituent unit is a six-membered ring with carbon atoms disposed at apexes thereof, and these are successively coupled to each other with other six-membered rings being adjacent to each other.

Characteristics of the CNTs 11a depend on chirality of the aforementioned tubular elements. Chirality is roughly classified into an armchair type, a zigzag type, and a chiral type, the armchair type exhibits metallic behaviors, the zigzag type exhibits semiconducting and semi-metallic behaviors, and the chiral type exhibits semiconducting and semi-metallic behaviors. Thus, the electroconductivity of the CNTs 11a significantly differs depending on which of chirality the tubular elements have. In order to further improve electroconductivity, it is preferable to increase the proportion of the armchair-type CNTs 11a that exhibit metallic behaviors in the CNT aggregates 11 that configure the CNT wire 10 of the coated CNT electric wire 1.

On the other hand, it is known that the chiral-type CNTs 11a exhibit metallic behaviors by doping the chiral-type CNTs 11a that exhibit semiconducting behaviors with a substance (a different kind of element) with electron donating properties or electron receiving properties. Also, electroconductivity decreases due to occurrence of scattering of conductive electrons inside typical metal by doping the metal with a different kind of element. Similarly, doping the CNTs 11a that have metallic behaviors with a different kind of element leads to a decrease in electroconductivity.

In this manner, an effect of doping of the CNTs 11a that exhibit metallic behaviors and the CNTs 11a that exhibit semiconducting behaviors has a trade-off relationship in terms of electroconductivity. Thus, it is theoretically desirable to separately produce the CNTs 11a that exhibit metallic behaviors and the CNTs 11a that exhibit semiconducting behaviors, performing doping processing only on the CNTs 11a that exhibit semiconducting behaviors, and then combining these. In a case in which the CNTs 11a that exhibit metallic behaviors and the CNTs 11a that exhibit semiconducting behaviors are produced in a coexisting state, it is preferable to select such a layer structure of the CNTs 11a that the doping processing using a different kind of element or molecule becomes effective. In this manner, it is possible to further improve the electroconductivity of the CNT wire 10 made of a mixture of the CNTs 11a that exhibit metallic behaviors and the CNTs 11a that exhibit semiconducting behaviors.

For example, a CNT with a small number of layers, such as a two-layer structure or a three-layer structure, has relatively higher electroconductivity than that of a CNT with a larger number of layers, and the highest doping effect can be achieved in the CNT with the two-layer structure or the three-layer structure when doping processing is performed. Therefore, it is preferable to increase the proportion of CNTs with a two-layer structure or a three-layer structure for the purpose of further improving electroconductivity of the CNT wire 10. Specifically, the proportion of the CNTs with a two-layer structure or a three-layer structure with respect to all the CNTs is preferably equal to or greater than 50% by number and is more preferably equal to or greater than 75% by number. The proportion of CNTs with a two-layer structure or a three-layer structure can be calculated by observing and analyzing the section of the CNT aggregates 11 using a transmission electron microscope (TEM) and measuring the number of layers in each of 100 CNTs.

Next, orientations of the CNTs 11a and CNT aggregates 11 in the CNT wire 10 will be described.

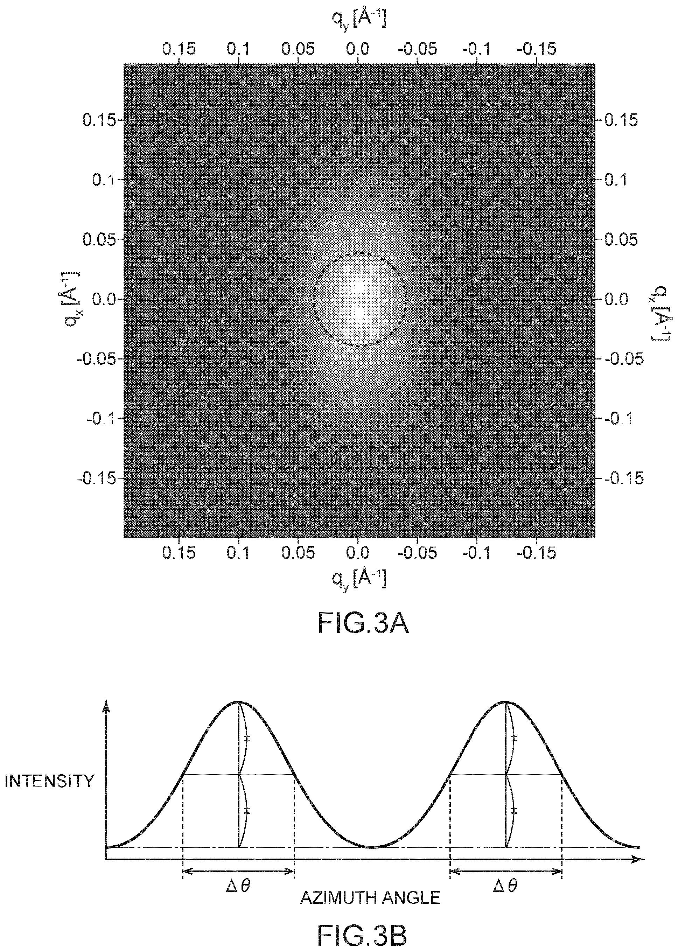

FIG. 3A is a diagram illustrating an example of a two-dimensional scattering image of scattering vectors q of the plurality of CNT aggregates 11, 11, ... based on small-angle X-ray scattering (SAXS), and FIG. 3B is a graph illustrating an example of azimuth plot illustrating a relationship of azimuth angle-scattering intensity of an arbitrary scattering vector q using a position of a transmitted X ray as an origin in a two-dimensional scattering image.

The SAXS is suitable for evaluating a structure and the like of a size of several nm to several tens of nm. For example, it is possible to evaluate orientations of the CNTs 11a with outer diameters of several nm and the CNT aggregates 11 with outer diameters of several tens of nm by analyzing information of an X-ray scattering image by the following method using the SAXS. If an X-ray scattering image of the CNT wire 10 is analyzed, for example, q_{y} that is a y component is relatively narrowly distributed than qₓ that is an x component of the scattering vector q (q = 2π/d, d is a lattice surface interval) of the CNT aggregates 11 as illustrated in FIG. 3A. Also, as a result of analyzing the azimuth plot of SAXS for the same CNT wire 10 as that in FIG. 3B, the full-width at half maximum Δθ in azimuth angle in azimuth plot illustrated in FIG. 3B is 48°. It is possible to state, on the basis of these analysis results, that the plurality of CNTs 11a, 11a, ... and the plurality of CNT aggregates 11, 11, ... have satisfactory orientations in the CNT wire 10. In this manner, since the plurality of CNTs 11a, 11a, ... and the plurality of CNT aggregates 11, 11, ... have satisfactory orientations, the heat of the CNT wire 10 is more likely to be discharged while smoothly delivered along the longitudinal direction of the CNTs 11a and the CNT aggregates 11. Thus, since it is possible to adjust a heat dissipation route in the longitudinal direction and in the radial sectional direction by adjusting the aforementioned orientations of the CNTs 11a and the CNT aggregates 11, the CNT wire 10 exhibits more excellent heat dissipation characteristics as compared with the core wire made of metal. Note that the orientations indicate angular differences of the CNTs and the CNT aggregates inside with respect to a vector V of the stranded wire produced by twisting the CNTs together in the longitudinal direction.

In order to further improve heat dissipation characteristics of the CNT wire 10 by obtaining an orientation in a predetermined or higher level represented by the full-width at half maximum Δθ in azimuth angle in azimuth plot based on small-angle X-ray scattering that indicates the orientation of the plurality of CNT aggregates 11, 11, ..., the full-width at half maximum Δθ in azimuth angle is preferably equal to or less than 60° and is particularly preferably equal to or less than 50°.

Next, an alignment structure and density of the plurality of CNTs 11a that configure the CNT aggregates 11 will be described.

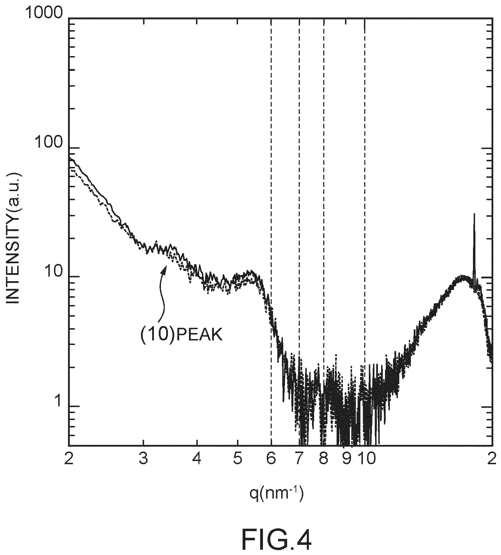

FIG. 4 is a graph illustrating a relationship of a q value-intensity obtained by wide-angle X-ray scattering (WAXS) of the plurality of CNTs 11a, 11a, ... that configure the CNT aggregates 11.

The WAXS is suitable for evaluating a structure and the like of a material with a size of equal to or less than several nm. For example, it is possible to evaluate density of the CNTs 11a with outer diameters of equal to or less than several nm by analyzing information of an X-ray scattering image by the following method using the WAXS. As a result of analyzing a relationship between a scattering vector q and intensity for an arbitrary one CNT aggregate 11, a value of a lattice constant estimated from the q value of the peak top at the (10) peak observed near q = 3.0 nm⁻¹ to 4.0 nm⁻¹ is measured as illustrated in FIG. 4. It is possible to confirm that the CNTs 11a, 11a, ... form hexagonal closest-packing structure in a plan view, on the basis of the measurement value of the lattice constant and the diameter of the CNT aggregate observed by Raman spectroscopy, a TEM, or the like. Therefore, it is possible to state that diameter distribution of the plurality of CNT aggregates in the CNT wire is narrow, and the plurality of CNTs 11a, 11a, ... are aligned with regularity, that is, with high density, thus form a hexagonal closest-packing structure, and are present with high density. Since the plurality of CNT aggregates 11, 11, ... have satisfactory orientations and the plurality of CNTs 11a, 11a, ... that configure the CNT aggregates 11 are aligned with regularity and are disposed with high density as described above, the heat from the CNT wire 10 is likely to be discharged while smoothly delivered along the longitudinal direction of the CNT aggregates 11. Therefore, since it is possible to adjust the heat dissipation route in the longitudinal direction and the radial sectional direction by adjusting the alignment structures and the density of the CNT aggregates 11 and the CNTs 11a, the CNT wire 10 exhibits excellent heat dissipation characteristics as compared with the core wire made of metal.

In order to further improve heat dissipation characteristics by obtaining high density, it is preferable that the q value of the peak top at the (10) peak of the intensity based on X-ray scattering that indicates the density of the plurality of CNTs 11a, 11a, ... be equal to or greater than 2.0 nm⁻¹ and equal to or less than 5.0 nm⁻¹, and that the full-width at half maximum Δq (FWHM) be equal to or greater than 0.1 nm⁻¹ and equal to or less than 2.0 nm⁻¹.

The orientations of the CNT aggregates 11 and the CNTs 11a and the alignment structure and the density of the CNTs 11a can be adjusted by appropriately selecting a spinning method such as dry spinning, wet spinning, or liquid crystal spinning and spinning conditions for the spinning method, which will be described later.

Next, the insulating coating layer 21 with which the outer surface of the CNT wire 10 will be described.

As a material of the insulating coating layer 21, a material used in an insulating coating layer of a coated electric wire using metal in a core wire can be used, an examples thereof include a thermoplastic resin and a thermosetting resin. Examples of the thermoplastic resin includes polytetrafluoroethylene (PTFE) (Young's modulus: 0.4 GPa), polyethylene (Young's modulus: 0.1 to 1.0 GPa), polypropylene (Young's modulus: 1.1 to 1.4 GPa), polyacetal (Young's modulus: 2.8 GPa), polystyrene (Young's modulus: 2.8 to 3.5 GPa), polycarbonate (Young's modulus: 2.5 GPa), polyamide (Young's modulus: 1.1 to 2.9 GPa), polyvinyl chloride (Young's modulus: 2.5 to 4.2 GPa), polymethyl methacrylate (Young's modulus: 3.2 GPa), polyurethane (Young's modulus: 0.07 to 0.7 GPa), and the like. Examples of the thermosetting resin include polyimide (2.1 to 2.8 GPa), a phenol resin (5.2 to 7.0 GPa), and the like. One of these may be used alone, or two or more of these may appropriately be mixed and used. Although the Young's modulus of the insulating coating layer 21 is not particularly limited, the Young's modulus is preferably equal to or greater than 0.07 GPa and equal to or less than 7 GPa and is particularly preferably equal to or greater than 0.07 GPa and equal to or less than 4 GPa, for example.

The insulating coating layer 21 may include one layer as illustrated in FIG. 1 or may include two or more layers instead. Also, a thermosetting resin layer may further be provided between the outer surface of the CNT wire 10 and the insulating coating layer 21 as needed.

The proportion of the sectional area of the insulating coating layer 21 in the radial direction with respect to the sectional area of the CNT wire 10 in the radial direction is within a range of equal to or greater than 0.001 and equal to or less than 1.5. By the proportion of the sectional areas falling within the range of equal to or greater than 0.001 and equal to or less than 1.5, it is possible to obtain a CNT wire 10 with a lighter weight as compared with a core wire made of copper, aluminum or the like and to reduce the thickness of the insulating coating layer 21. Thus, it is possible to implement weight reduction for the electric wire coated with the insulating coating layer and to obtain excellent heat dissipation characteristics against the heat of the CNT wire 10.

Although there is a case in which it is difficult to maintain the shape in the longitudinal direction only with the CNT wire 10 alone, the coated CNT electric wire 1 can maintain the shape in the longitudinal direction, and deformation working such as bending working can easily be performed thereon since the outer surface of the CNT wire 10 is coated with the insulating coating layer 21 at the aforementioned proportion of the sectional area. Therefore, it is possible to form the coated CNT electric wire 1 into a shape along a desired wiring route.

Further, since minute unevenness is formed on the outer surface of the CNT wire 10, adhesiveness between the CNT wire 10 and the insulating coating layer 21 is improved, and it is possible to curb peeling-off between the CNT wire 10 and the insulating coating layer 21, as compared with a coated electric wire using a core wire made of aluminum or copper.

Although the proportion of the sectional areas is not particularly limited as long as the proportion is within the range of equal to or greater than 0.001 and equal to or less than 1.5, an upper limit value of the proportion of the sectional areas is preferably 1.0, is more preferably 0.80 and is particularly preferably 0.27 in terms of further weight reduction of the coated CNT electric wire 1 and a further improvement in heat dissipation characteristics with respect to a heat of the CNT wire 10.

Although the sectional area of the CNT wire 10 in the radial direction is not particularly limited in a case in which the proportion of the sectional areas is within a range of equal to or greater than 0.001 and equal to or less than 1.5, the sectional area is preferably equal to or greater than 0.0005 mm² and equal to or less than 80 mm², is more preferably equal to or greater than 0.01 mm² and equal to or less than 10 mm², and is particularly preferably equal to or greater than 0.03 mm² and equal to or less than 6.0 mm², for example. Although the sectional area of the insulating coating layer 21 in the radial direction 21 is not particularly limited, the sectional area is preferably equal to or greater than 0.003 mm² and equal to or less than 40 mm² and is particularly preferably equal to or greater than 0.015 mm² and equal to or less than 5 mm², for example, in terms of a balance between insulation reliability and heat dissipation characteristics. The sectional areas can be measured from a scanning electron microscope (SEM) observation image, for example. Specifically, an SEM image (100 times to 10,000 times) of a section of the coated CNT electric wire 1 in the radial direction is obtained, and an area obtained by subtracting the area of the material of the insulating coating layer 21 incorporated in the CNT wire 10 from the area of the portion surrounded by the periphery of the CNT wire 10 and a total of the area of the portion corresponding to the insulating coating layer 21, with which the periphery of the CNT wire 10 is coated, and the area of the material of the insulating coating layer 21 incorporated in the CNT wire 10 are defined as the sectional area of the CNT wire 10 in the radial direction and the sectional area of the insulating coating layer 21 in the radial direction, respectively. The sectional area of the insulating coating layer 21 in the radial direction also includes the resin incorporated into the CNT wire 10.

The Young's modulus of the CNT wire 10 is higher than the Young's moduli of aluminum and copper used in core wires in the related art. While the Young's modulus of aluminum is 70.3 GPa and the Young's modulus of copper is 129.8 GPa, the Young's modulus of the CNT wire 10 is 300 to 1500 GPa, which is a value that is equal to or greater than a double. Thus, since it is possible to use a material as a high Young's modulus (a thermoplastic resin with a high Young's modulus) as a material of the insulating coating layer 21 as compared with a coated electric wire using aluminum or copper in a core wire, it is possible to apply excellent abrasion resistance to the insulating coating layer 21 of the coated CNT electric wire 1, and the coated CNT electric wire 1 thus exhibits excellent durability.

As described above, since the Young's modulus of the CNTs is higher than the Young's moduli of aluminum and copper used in a core wire in the related art, the proportion of the Young's modulus of the material configuring the insulating coating layer with respect to the Young's modulus of the core line in the coated CNT electric wire 1 is smaller than the proportion of the Young's moduli in the coated electric wire using aluminum or copper in the core wire. Therefore, it is possible to curb peeling-off of the CNT wire 10 and the insulating coating layer 21 and cracking of the insulating coating layer 21 even if the coated CNT electric wire 1 is repeatedly bent, as compared with the coated electric wire using aluminum or copper in the core wire.

Although the proportion of the Young's modulus of the material configuring the insulating coating layer 21 with respect to the Young's modulus of the CNT wire 10 is not particularly limited, a lower limit of the proportion of the Young's moduli is preferably 0.00001 in order to prevent the insulating coating layer 21 from peeling off from the CNT wire 10 by the insulating coating layer 21 following the CNT wire 10 even if the coated CNT electric wire 1 is repeatedly bent, and the lower limit value is more preferably 0.0005 and is particularly preferably 0.001 in order to prevent the insulating coating layer 21 from peeling off from the CNT wire 10 even if the coated CNT electric wire 1 is bent for a long period of time. On the other hand, an upper limit value of the proportion of the Young's moduli is preferably 0.5 in order to prevent cracking from occurring in the insulating coating layer 21 even if the coated CNT electric wire 1 is repeatedly bent, and the upper limit value is more preferably 0.1, is further preferably 0.01, and is particularly preferably 0.005 in order to prevent cracking from occurring in the insulating coating layer 21 even if the coated CNT electric wire 1 is bent for a long period of time.

The thickness of the insulating coating layer 21 in a direction that perpendicularly intersects the longitudinal direction (that is, the radial direction) is uniformized in order to improve mechanical strength such as abrasion resistance of the coated CNT electric wire 1. Specifically, the thickness deviation rate of the insulating coating layer 21 is preferably equal to or greater than 50% and is particularly preferably equal to or greater than 80% in order to further improve abrasion resistance and bendability, for example. Note that in the specification, the "thickness deviation rate" means a value obtained by calculating α = (a minimum thickness value of the insulating coating layer 21/a maximum thickness value of the insulating coating layer 21) × 100 for each of the same sections in the radial direction at every 10 cm in arbitrary 1.0 m of the coated CNT electric wire 1 on the center side in the longitudinal direction and averaging the values α calculated for the respective sections. Also, the thickness of the insulating coating layer 21 can be measured from an SEM observation image by circularly approximating the CNT wire 10, for example. Here, the center side in the longitudinal direction indicates a region located at the center when seen in the longitudinal direction of the wire.

The thickness deviation rate of the insulating coating layer 21 can be improved by increasing a degree of tension of the CNT wire 10 passing through a die in an extrusion process in the longitudinal direction in a case in which the insulating coating layer 21 is formed on the peripheral surface of the CNT wire 10 using extrusion coating, for example.

Next, an exemplary method of manufacturing the coated CNT electric wire 1 according to the embodiment of the present disclosure will be described. The coated CNT electric wire 1 can be manufactured by manufacturing the CNTs 11a first, forming the CNT wire 10 from the plurality of obtained CNTs 11a, and coating the peripheral surface of the CNT wire 10 with the insulating coating layer 21. Also, the coated CNT electric wire 1 according to the present disclosure may be an electric wire in which the insulating coating layer 21 is provided directly on the CNT wire 10 or may be an electric wire obtained by directly applying an insulating coating to the CNT wire 10 and then twisting the CNT wire 10.

The CNTs 11a can be produced by a method such as a floating catalyst method (Patent No. 5819888) or a substrate method (Patent No. 5590603). The single wire of the CNT wire 10 can be produced by dry spinning (Japanese Patent Nos. 5819888, 5990202, and 5350635), wet spinning (Japanese Patent Nos. 5135620, 5131571, and 5288359), liquid crystal spinning (National Publication of International Patent Application No. 2014-530964), or the like.

As a method of coating the peripheral surface of the thus obtained CNT wire 10 with the insulating coating layer 21, a method of coating a core wire of aluminum or copper with an insulating coating layer can be used, and examples thereof include a method of melting a thermoplastic resin that is a raw material of the insulating coating layer 21 and extruding the thermoplastic resin around the CNT wire 10 to coat the CNT wire 10 with the thermoplastic resin.

The coated CNT electric wire 1 according to the embodiment of the present disclosure can be used as a general electric wire such as a wire harness, and also, a cable can be produced from the general electric wire using the coated CNT electric wire 1.

### Examples

Although examples of the present disclosure will be described below, the present disclosure is not limited to the following examples without departing from the gist of the present disclosure.

### Concerning Examples 1 to 13 and Comparative Examples 1 to 4 Concerning method of manufacturing CNT wire

First, a single wire (single-strand wire) of a CNT wire with an equivalent circle diameter of 0.2 mm was obtained by a dry spinning method (Japanese Patent No. 5819888) in which CNTs produced by the floating catalyst method were spun directly or a wet spinning method (Japanese Patent Nos. 5135620, 5131571, and 5288359). Also, the CNT wire with an equivalent circle diameter of greater than 0.2 mm was obtained by adjusting the number of CNT wires with an equivalent circle diameter of 0.2 mm and appropriately twisting the CNT wires to obtain a stranded wire.

### Concerning method of coating outer surface of CNT wire with insulating coating layer

The insulating coating layer was formed by extrusion-coating the surroundings of the conductive element with polyurethane a below using an ordinary electric wire manufacturing extrusion molding machine, and the coated CNT electric wire used in Examples and Comparative Examples in Table 1 below was produced.

### (a) Measurement of sectional area of CNT wire

A section of the CNT wire in the radial direction was cut using an ion milling device (IM4000 manufactured by Hitachi High-Tech Corporation), and the sectional area of the CNT wire in the radial direction was then measured from an SEM image obtained by a scanning electron microscope (SU8020 manufactured by Hitachi High-Tech Corporation, magnification: 100 times to 10,000 times). Similar measurement was repeated at every 10 cm from arbitrary 1.0 m of the coated CNT electric wire on the center side in the longitudinal direction, and an average value thereof was defined as a sectional area of the CNT wire in the radial direction. Note that the resin incorporated in the CNT wire was not included in the sectional area of the CNT wire.

### (b) Measurement of sectional area of insulating coating layer

A section of the CNT wire in the radial direction was cut using an ion milling device (IM4000 manufactured by Hitachi High-Tech Corporation), and the sectional area of the insulating coating layer in the radial direction was then measured from an SEM image obtained by a scanning electron microscope (SU8020 manufactured by Hitachi High-Tech Corporation, magnification: 100 times to 10,000 times). Similar measurement was repeated at every 10 cm from arbitrary 1.0 m of the coated CNT electric wire on the center side in the longitudinal direction, and an average value thereof was defined as a sectional area of the insulating coating layer in the radial direction. Therefore, a resin incorporated in the CNT wire was also included in the sectional area of the insulating coating layer.

### (c) Measurement of full-width at half maximum Δθ in azimuth angle based on SAXS

X-ray scattering measurement was conducted using a small-angle X-ray scattering device (Aichi Synchrotron), and a full-width at half maximum Δθ in azimuth angle was obtained from the obtained azimuth plot.

### (d) Measurement of q value and full-width at half maximum Δq at peak top based on WAXS

Wide-angle X-ray scattering measurement was performed using a wide-angle X-ray scattering device (Aichi Synchrotron), and a q value and a full-width at half maximum Qi of the peak top at the (10) peak of intensity were obtained from the obtained q-value-intensity graph.

### (e) Measurement of thickness deviation rate

A value α = (a minimum thickness value of the insulating coating layer/a maximum thickness value of the insulating coating layer) × 100 was calculated for the same section in the radial direction at every 10 cm from arbitrary 1.0 m of the coated CNT electric wire on the center side in the longitudinal direction, and the thickness deviation rate was measured using the value obtained by averaging the values α calculated in the respective sections. Also, the thickness of the insulating coating layer 21 can be measured from an SEM observation image as a shortest distance between an interface of the circle-approximated CNT wire 10 and the insulating coating layer 21, for example.

### (f) Measurement of Young's modulus of insulating coating layer/Young's modulus of CNT wire

A coating layer of 1.0 m of coated CNT electric wire was caused to peel off, and 5 cm test pieces were collected from each of the separated coating and the CNT wire at every 20 cm in the longitudinal direction. A tensile test was conducted by the method in accordance with JIS K7161-1, and the Young's modulus of the separated coating and the Young's modulus of the CNT wire were obtained. A ratio of the aforementioned Young's moduli was calculated from a value obtained by averaging the Young's modulus of the coating and the Young's modulus of the CNT wire.

Results of the aforementioned measurement performed on the coated CNT electric wires are shown in Table 1 below.

The coated CNT electric wires produced as described above were evaluated as follows.

### (1) Heat dissipation characteristics

Four terminals were connected to both ends of a 100 cm coated CNT electric wire, and resistance was measured by a four-terminal method. At this time, an applied current was set to 2000 A/cm², and a temporal change in resistance value was recorded. Resistance values at the time of starting the measurement and after elapse of 10 minutes were compared, and an increase rate was calculated. Since the resistance of the CNT electric wire increases in proportion to the temperature, it is possible to determine that the CNT electric wire with a smaller resistance increase rate has more excellent heat dissipation characteristics. The resistance increase rate of less than 5% was evaluated as O, the resistance increase rate of equal to or greater than 5% and less than 10% was evaluated as △, and the resistance increase rate of equal to or greater than 10% was evaluated as ×. However, since different conductive elements have different coefficients of correlation between a temperature and an increase in resistance, it is not possible to compare the CNT electric wires, the copper electric wire and the like using this evaluation method. Therefore, heat dissipation characteristics were not evaluated in Comparative Examples 3 and 6 in which the core wire was made of copper and Comparative Examples 4 and 5 in which the core wire was made of aluminum.

### (2) Insulation reliability

Evaluation was conducted by the method in accordance with Article 13.3 of JIS C3215-0-1. Test results that satisfied the grade 3 described in Table 9 were evaluated as "⊙", test results that satisfied the grade 2 were evaluated as "O", test results that satisfied the grade 1 were evaluated as "△", and test results that satisfied no grades were evaluated as "×".

Results of the aforementioned evaluation are shown in Table 1 below.

| | Sectional area (mm²) | | (B)/(A) | Form of CNT wire | Young's modulus of insulating coatting layer/Young 's modulus | Thickness deviation rate (%) | Heat dissipation characterist ics | Insulating reliability |
|---|---|---|---|---|---|---|---|---|
| | GNT wire (A) | Insulating coating layer (B) | | | | | | |
| Example 1 | 0,031 | 0,0032 | 0,10 | Single-stranded wire | 0,0008 | 55 | ○ | △ |
| Example 2 | 0,031 | 0,0083 | 0,27 | Singte-stranded wire | 0,0003 | 64 | ○ | △ |
| Example 3 | 0,031 | β,039 | 1,3 | Singte-stranded wire | 0,0008 | 71 | △ | ○ |
| Example 4 | 0,75 | 0,015 | 0,021 | Stranded wire of 24 single-stranded wires | 0,0008 | 70 | ○ | ○ |
| Example 5 | 0,75 | 0,039 | 0,052 | Stranded wire of 24 single-stranded wires | 0,0008 | 78 | ○ | ○ |
| Example 6 | 0,75 | 0,53 | 0,71 | Stranded wire of 24 single-stranded wires | 0,0008 | 82 | ○ | ○ |
| Example 7 | 3,0 | 0,077 | 0,026 | stranded wire of 96 single-stranded wires | 0,0008 | 83 | ○ | ○ |
| Example 8 | 3,0 | 0,32 | 0,10 | stranded wire of 96 single-stranded wires | 0,0008 | 86 | ○ | ○ |
| Example 9 | 3,0 | 0,8 | 0,27 | stranded wire of 96 single-stranded wires | 0,0008 | 92 | ○ | ⊚ |
| Example 10 | 6,0 | 0,35 | 0,058 | Stranded wire of 192 single-stranded wires | 0,0008 | 87 | ○ | ○ |
| Example 11 | 6,0 | 1,9 | 0,32 | Stranded wire of 192 single-stranded wires | 0,0008 | 91 | △ | ⊚ |
| Example 12 | 6,0 | 4,2 | 0,70 | Stranded wire of 192 single-stranded wires | 0,0008 | 93 | △ | ⊚ |
| Example 13 | 0,75 | 0,0031 | 0,0041 | Stranded wire of 24 single-stranded wires | 0,0008 | 43 | △ | × |
| Comparative Example 1 | 0,031 | 0,054 | 1,7 | Singte-stranded wire | 0,0008 | 75 | × | ○ |
| Comparative Example 2 | 3,0 | 6,4 | 2,1 | stranded wire of 96 single-stranded wires | 0,0008 | 90 | × | ⊚ |
| Comparative Example 3 | 0.031 (Core wire: Cu) | 0,039 | 1,3 | Singte-stranded wire | 0,033 | 78 | - | ○ |
| Comparative Example 4 | 0.031 (Core wire A!) | 0,039 | 1,3 | Single-stranded wire | 0,018 | 80 | - | ○ |

As shown in Table 1 above, the coated CNT electric wires with satisfactory heat dissipation characteristics were obtained in Examples 1 to 13 in each of which the proportion of the sectional area of the insulating coating layer in the radial direction with respect to the sectional area of the CNT wire in the radial direction was equal to or greater than 0.0041 and equal to or less than 1.3. Also, coated CNT electric wires with further satisfactory heat dissipation characteristics were obtained in Examples 1, 2, and 4 to 10 in each of which the proportion of the sectional area of the insulating coating layer in the radial direction with respect to the sectional area of the CNT wire in the radial direction is equal to or greater than 0.021 and equal to or less than 0.71. Also, excellent insulation reliability was obtained without degrading heat dissipation characteristics in the coated CNT electric wires in which the thicknesses of the insulating coating layers were reduced in Examples 9, 11, and 12.

Further, the full-width at half maximum Δθ in azimuth angle was equal to or less than 60° in each of Examples 1 to 13. Therefore, the CNT aggregates in the CNT wires in Examples 1 to 13 had excellent orientations. Further, the q value of the peak top at the (10) peak of the intensity was equal to or greater than 2.0 nm⁻¹ and equal to or greater than 5.0 nm⁻¹, and the full-width at half maximum Δq was equal to or greater than 0.1 nm⁻¹ and equal to or less than 2.0 nm⁻¹ in each of Examples 1 to 13. Thus, the CNTs had excellent orientations in the CNT wires in Examples 1 to 13.

On the other hand, no heat dissipation characteristics were obtained in Comparative Examples 1 and 2 in which the proportions of the sectional areas of the insulating coating layers in the radial direction with respect to the sectional areas of the CNT wires in the radial direction were 1.7 and 2.1, respectively.

Concerning Examples 1, 4, 7, and 14 to 26 and Comparative Examples 5 and 6

Next, resin types of the insulating coating layers were changed as shown in Table 2 below, and coated CNT electric wires were produced.
Polyurethane a: TPU3000EA manufactured by Totoku Toryo Co. Ltd.
Polyurethane b: TPU5200 manufactured by Totoku Toryo Co., Ltd.
Polyimide: U imide manufactured by Unitika Ltd.
Polypropylene: Novatec PP manufactured by Japan Polypropylene Corporation

All of the sectional areas of the CNT wires, the sectional areas of the insulating coating layers, and the thicknesses were measured by methods that were similar to those in Examples 1 to 13.

The following evaluation was conducted for the coated CNT electric wires produced as described above.

### (3) Abrasion resistance

Evaluation was conducted by the method in accordance with Article 6 of JIS C3216-3. Test results that satisfied the grade 2 described in Table 1 in JIS C3215-4 were evaluated as O, test results that satisfied the grade 1 were evaluated as △, test results that satisfied no grades were evaluated as ×.

### (4) Bendability

By the method in accordance with IEC 60227-2, a 100 cm coated CNT electric wire was bent at 90 degrees under a load of 500 gf 1000 times. Then, sectional surfaces were observed at every 10 cm in the axial direction, and whether or not peeling had occurred between the conductive element and the coating was checked. A case in which no peeling occurred was evaluated as O, a case in which partial peeling occurred was evaluated as △, a case in which the conductive element was disconnected was evaluated as ×.

Note that both the heat dissipation characteristics and the insulation reliability were evaluated by evaluation methods that were similar to those in Examples 1 to 13.

Results of the aforementioned evaluation are shown in Table 2 below.

| Resin type of insulating coating layer | Sectional area (mm²) | | (B)/(A) | Form of CNT wire | Young's modulus of insulating coating layer/Young's modulus of | Thickness deviation rate (%) | Abrasion resistance | Bendability | Heat dissipation characteris tics | insulation reliability |
|---|---|---|---|---|---|---|---|---|---|---|
| | CNT wire (A) | Insulating coating layer (B) | | | | | | | | |
| Polyurethane a | 0.031 | 0,0032 | 0,10 | Single-stranded wire | 0,0008 | 55 | Δ | ○ | ○ | Δ |
| Polyurethane a | 0,75 | 0,015 | 0,021 | Stranded wire of 24 single-stranded wires | 0,0008 | 70 | Δ | ○ | ○ | ○ |
| Polyurethane a | 3,0 | 0,077 | 0,026 | stranded wire of 96 single-stranded wires | 0,0008 | 83 | ○ | ○ | ○ | ○ |
| Polyurethane a | 3,0 | 0,042 | 0,014 | stranded wire of 96 single-stranded wires | 0,0008 | 50 | ○ | Δ | ○ | ○ |
| Polyurethane b | 0,031 | 0,0028 | 0,09 | Single-stranded wire | 0,0008 | 63 | Δ | ○ | ○ | Δ |
| Polyurethane b | 0,75 | 0,019 | 0,025 | Stranded wire of 24 single-stranded wires | 0,0008 | 74 | Δ | ○ | ○ | ○ |
| Polyurethane b | 3,0 | 0,061 | 0,020 | stranded wire of 96 single-stranded wires | 0,0008 | 85 | ○ | ○ | ○ | ○ |
| Polyurethane b | 3,0 | 0,040 | 0,013 | stranded wire of 96 single-stranded wires | 0,0008 | 55 | ○ | Δ | ○ | ○ |
| Polyimide | 0,031 | 0,0033 | 0,11 | Singte-stranded wire | 0,0008 | 59 | Δ | ○ | ○ | Δ |
| Polyimide | 0,75 | 0,018 | 0,024 | Stranded wire of 24 single-stranded wires | 0,0008 | 72 | Δ | ○ | ○ | ○ |
| Polyimide | 3,0 | 0,005 | 0,022 | stranded wire of 96 single-stranded wires | 0,0008 | 80 | ○ | ○ | ○ | ○ |
| Polyimide | 3,0 | 0,035 | 0,012 | stranded wire of 96 single-stranded wires | 0,0008 | 50 | ○ | ○ | ○ | ○ |
| Polypropylene | 0,031 | 0,0032 | 0,10 | Single-stranded wire | 0,0008 | 53 | ○ | ○ | ○ | Δ |
| Polypropylene | 0,75 | 0,015 | 0,021 | Stranded wire of 24 single-stranded wires | 0,0008 | 65 | Δ | ○ | ○ | ○ |
| Polypropylene | 3,0 | 0,077 | 0,026 | stranded wire of 96 single-stranded wires | 0,0008 | 71 | Δ | ○ | ○ | ○ |
| Polypropylene | 3,0 | 0,038 | 0,013 | stranded wire of 96 single-stranded wires | 0,0008 | 51 | ○ | Δ | ○ | ○ |
| Polyurethane ₐ | 0,031 | 0,039 | 1,25 | 0,20 | 0,0008 | 80 | ○ | × | - | ○ |
| Polyurethane ₐ | 0,031 | 0,039 | 1,25 | 0,20 | 0,0008 | 78 | ○ | × | - | ○ |

As shown in Table 2 above, it was possible to obtain coated CNT electric wires with both satisfactory heat dissipation characteristics and satisfactory insulation reliability regardless of which of polyurethane a, polyurethane b, polystyrene, and polytetrafluoroethylene the resin types are in Examples 1, 4, 7, and 14 to 26 in which the proportions of the sectional areas of the insulating coating layers in the radial direction with respect to the sectional areas of the CNT wires in the radial direction were within the range of equal to or greater than 0.01 and equal to or less than 1.5. Further, it was possible to obtain coated CNT electric wires with excellent abrasion resistance and bendability as well in Examples 1, 4, 7, and 14 to 26.

In particular, it was possible to improve the abrasion resistance and the bendability with satisfactory balance in Examples 7, 17, and 21 in which the thicknesses of the insulating coating layers were reduced such that the thickness deviation rates were equal to or greater than 80%. Also, a trend that the bendability was improved as the proportion of the Young's modulus of the insulating coating layer with respect to the Young's modulus of the CNT wire increased in Examples 1, 4, 7, and 14 to 26.

On the other hand, it was not possible to obtain bendability if the metal wires were used in the core wires in Comparative Examples 5 and 6.

### List of Reference Signs

1 coated carbon nanotube electric wire
10 carbon nanotube wire
11 carbon nanotube aggregates
11a carbon nanotube
21 insulating coating layer

## Claims

1. A coated carbon nanotube electric wire comprising:
a carbon nanotube wire including one or more carbon nanotube aggregates configured of a plurality of carbon nanotubes; and
an insulating coating layer coating the carbon nanotube wire,
wherein a proportion of a sectional area of the insulating coating layer in a radial direction with respect to a sectional area of the carbon nanotube wire in the radial direction is equal to or greater than 0.001 and equal to or less than 1.5, and
a q value of a peak top at a (10) peak of scattering intensity based on X-ray scattering indicating density of the plurality of carbon nanotubes is equal to or greater than 2.0 nm⁻¹ and equal to or less than 5.0 nm⁻¹, and a full-width at half maximum Δq is equal to or greater than 0.1 nm⁻¹ and equal to or less than 2.0 nm.

2. The coated carbon nanotube electric wire according to claim 1,
wherein the sectional area of the carbon nanotube wire in the radial direction is equal to or greater than 0.03 mm² and equal to or less than 80 mm².

3. The coated carbon nanotube electric wire according to claim 1 or 2,
wherein a proportion of a Young's modulus of a material configuring the insulating coating layer with respect to a Young's modulus of the carbon nanotube wire is equal to or greater than 0.00001 and equal to or less than 0.5.

4. The coated carbon nanotube electric wire according to claim 1 or 2,
wherein a proportion of a Young's modulus of a material configuring the insulating coating layer with respect to a Young's modulus of the carbon nanotube wire is equal to or greater than 0.0005 and equal to or less than 0.1.

5. The coated carbon nanotube electric wire according to any one of claims 1 to 4,
wherein the carbon nanotube wire includes a plurality of the carbon nanotube aggregates, and a full-width at half maximum Δθ in azimuth angle in azimuth plot based on small-angle X-ray scattering indicating an orientation of the plurality of carbon nanotube aggregates is equal to or less than 60°.

6. The coated carbon nanotube electric wire according to any one of claims 1 to 5,
wherein a thickness deviation rate of the insulating coating layer is equal to or greater than 50%.

7. The coated carbon nanotube electric wire according to any one of claims 1 to 6,
wherein the thickness deviation rate of the insulating coating layer is equal to or greater than 80%.

## Patentansprüche

1. Ein beschichteter elektrischer Draht aus Kohlenstoffnanoröhren, umfassen:
einen Kohlenstoffnanoröhrendraht mit einem oder mehreren Kohlenstoffnanoröhrenaggregaten, die aus einer Vielzahl von Kohlenstoffnanoröhren bestehen; und
eine isolierende Überzugsschicht, die den Kohlenstoffnanoröhrendraht umhüllt,
wobei ein Anteil einer Querschnittsfläche der isolierenden Überzugsschicht in einer radialen Richtung in Bezug auf eine Querschnittsfläche des Kohlenstoffnanoröhrendrahtes in der radialen Richtung gleich oder größer als 0,001 und gleich oder kleiner als 1,5 ist, und
ein q-Wert eines Spitzenwerts an einem (10)-Peak der Streuintensität auf der Grundlage von Röntgenstreuung, die die Dichte der Vielzahl von Kohlenstoffnanoröhren angibt, gleich oder größer als 2,0 nm⁻¹ und gleich oder kleiner als 5,0 nm⁻¹ ist, und eine volle Breite beim halben Maximum Δq gleich oder größer als 0,1 nm⁻¹ und gleich oder kleiner als 2,0 nm ist.

2. Beschichteter elektrischer Draht aus Kohlenstoffnanoröhren nach Anspruch 1,
wobei die Querschnittsfläche des Kohlenstoffnanoröhrendrahtes in radialer Richtung gleich oder größer als 0,03 mm² und gleich oder kleiner als 80 mm² ist.

3. Beschichteter elektrischer Draht aus Kohlenstoffnanoröhren nach Anspruch 1 oder 2,
wobei ein Anteil des Elastizitätsmoduls eines Materials, das die isolierende Überzugsschicht konfiguriert, in Bezug auf den Elastizitätsmodul des Kohlenstoffnanoröhrendrahtes gleich oder größer als 0,00001 und gleich oder kleiner als 0,5 ist.

4. Beschichteter elektrischer Draht aus Kohlenstoffnanoröhren nach Anspruch 1 oder 2,
wobei ein Anteil des Elastizitätsmoduls eines Materials, das die isolierende Überzugsschicht konfiguriert, in Bezug auf den Elastizitätsmodul des Kohlenstoffnanoröhrendrahtes gleich oder größer als 0,0005 und gleich oder kleiner als 0,1 ist.

5. Beschichteter elektrischer Draht aus Kohlenstoffnanoröhren nach einem der Ansprüche 1 bis 4,
wobei der Kohlenstoffnanoröhrendraht eine Vielzahl von Kohlenstoffnanoröhrenaggregaten enthält und eine volle Breite bei halbem Maximum Δθ im Azimutwinkel im Azimutplot auf der Grundlage der Röntgenkleinwinkelstreuung, die eine Orientierung der Vielzahl von Kohlenstoffnanoröhrenaggregaten anzeigt, gleich oder kleiner als 60° ist.

6. Beschichteter elektrischer Draht aus Kohlenstoffnanoröhren nach einem der Ansprüche 1 bis 5,
wobei eine Dickenabweichungsrate der isolierenden Überzugsschicht gleich oder größer als 50 % ist.

7. Beschichteter elektrischer Draht aus Kohlenstoffnanoröhren nach einem der Ansprüche 1 bis 6,
wobei die Dickenabweichungsrate der isolierenden Überzugsschicht gleich oder größer als 80 % ist.

## Revendications

1. Fil électrique revêtu de nanotubes de carbone comprenant :
un fil de nanotubes de carbone comprenant un ou plusieurs agrégats de nanotubes en carbone constitués d'une pluralité de nanotubes de carbone; et
une couche de revêtement isolant recouvrant le fil de nanotubes de carbone,
dans lequel une proportion d'une section de la couche de revêtement isolant dans une direction radiale par rapport à la section du fil de nanotubes de carbone dans la direction radiale est supérieure ou égale à 0,001 et inférieure ou égale à 1,5, et
une valeur q d'un sommet de crête à une crête (10) d'intensité de diffusion sur la base de la diffusion de rayons x indiquant la densité de la pluralité des nanotubes de carbone est supérieure ou égale à 2,0 nm⁻¹ et inférieure ou égale à 5,0 nm⁻¹, et une largeur à mi-hauteur Δq est supérieure ou égale à 0,1 nm⁻¹ et inférieure ou égale à 2,0 nm.

2. Fil électrique revêtu de nanotubes de carbone selon la revendication 1,
dans lequel la section du fil de nanotubes de carbone dans la direction radiale est supérieure ou égale à 0,03 mm² et inférieure ou égale à 80 mm².

3. Fil électrique revêtu de nanotubes de carbone selon la revendication 1 ou 2,
dans lequel une proportion d'un module de Young d'un matériau constituant la couche de revêtement isolant par rapport à un module de Young du fil de nanotubes de carbone est supérieure ou égale à 0,00001 et inférieure ou égale à 0,5.

4. Fil électrique revêtu de nanotubes de carbone selon la revendication 1 ou 2,
dans lequel une proportion d'un module de Young d'un matériau constituant la couche de revêtement isolant par rapport à un module de Young du fil de nanotubes de carbone est supérieure ou égale à 0,0005 et inférieure ou égale à 0,1.

5. Fil électrique revêtu de nanotubes de carbone selon l'une quelconque des revendications 1 à 4,
dans lequel le fil de nanotubes de carbones comprend une pluralité des agrégats de nanotubes de carbone, et la largeur à mi-hauteur Δθ dans l'angle d'azimut dans le plot d'azimut basé sur la diffusion des rayons x aux petits angles indiquant une orientation de la pluralité des agrégats de nanotubes de carbone est inférieure ou égale à 60°.

6. Fil électrique revêtu de nanotubes de carbone selon l'une quelconque des revendications 1 à 5,
dans lequel un taux d'écart d'épaisseur de la couche de revêtement isolant est supérieur ou égal à 50 %.

7. Fil électrique revêtu de nanotubes de carbone selon l'une quelconque des revendications 1 à 6,
dans lequel le taux d'écart d'épaisseur de la couche de revêtement isolant est supérieur ou égal à 80 %.
